# EUROPÄISCHE PATENTSCHRIFT

(11) **EP 1 580 032 B1**
(45) Veröffentlichungstag und Bekanntmachung des Hinweises auf die Patenterteilung: **20.10.2010**
(21) Anmeldenummer: 04007319.9
(22) Anmeldetag: 26.03.2004
(51) Int. Cl.: B60C 11/04

(54) **Fahrzeugluftreifen**
Pneumatic tyre
Bandage pneumatique

(43) Veröffentlichungstag der Anmeldung: 28.09.2005
(73) Patentinhaber: Continental Reifen Deutschland GmbH, 30165 Hannover (DE)
(72) Erfinder: METZ, Markus, 31535 Neustadt (DE)
(74) Vertreter: Finger, Karsten

(56) Entgegenhaltungen:
- EP-A- 0 816 130
- US-A- 5 960 845

## Beschreibung

Die Erfindung betrifft einen Fahrzeugluftreifen mit einem Laufstreifen, welcher durch Umfangsnuten und dergleichen gebildete Profilpositive, beispielsweise Laufstreifenbänder oder Blöcke in Blockreihen, aufweist, welche mit Sacknuten versehen sind, die sich von einer Umfangsnut ausgehend in das Laufstreifenband oder einen Block erstrecken und zur Abrollrichtung des montierten Reifens derart unter einem spitzen Winkel geneigt verlaufen, dass jeweils beim Abrollen des Reifens das in die Umfangsnut mündende Ende der Sacknuten vor ihrem anderen Ende in den Untergrund eintritt, und welche Sacknuten jeweils eine der gewählten Abrollrichtung des Reifens zugewandte Nutflanke, welche an die beim Abrollen des Reifens zuerst in den Untergrund eintretende Randkante der Sacknut anschließt, und, dieser Nutflanke gegenüberliegend, eine der Abrollrichtung abgewandte, beim Abrollen des Reifens auf nassem Untergrund von Wasser angeströmte Nutflanke aufweisen,

Fahrzeugluftreifen mit derart ausgeführten Laufstreifenprofilen sind in unterschiedlichen Ausführungsvarianten bekannt. Üblich sind beispielsweise Reifen mit Profilen, die Laufstreifenbänder und Blockreihen oder ausschließlich Laufstreifenbänder aufweisen. Laufstreifenbänder mit Sacknuten haben den Vorteil einer hohen Profilsteifigkeit in Umfangsrichtung. Hingegen ist ihre Fähigkeit, beim Fahren auf nassem Untergrund zum Verhindern von Aquaplaning eine ausreichende Entwässerung des Laufstreifens sicherzustellen, meist verbesserungswürdig.

Ein Fahrzeugluftreifen der eingangs genannten Art ist beispielsweise aus der US-A-5,960,854 bekannt. Der Laufstreifen dieses Reifens ist mit zwei bezüglich der Äquatorebene symmetrisch angeordneten breiten Umfangsnuten versehen, welche den Laufstreifen in einen Zentralbereich und zwei Schulterbereiche teilt. Der Zentralbereich und die beiden Schulterbereiche sind jeweils mit einer Vielzahl von Quernuten versehen, derart, dass die Quernuten im Zentralbereich gegenüber jenen in den Schulterbereichen in entgegengesetzte Richtungen geneigt verlaufen. Die Flanken der Quernuten sind gegenüber der Radialen in gleiche Richtung, übereinstimmend geneigt, wobei die Neidung der Flanken der Quernuten in den Schulterbereichen zur Neigung der Flanken der Quernuten im Zentralbereich entgegengesetzt ist. Mit einem derart ausgeführten Laufstreifenprofil soll die Manövrierfähigkeit des Reifens verbessert werden.

Aus der EP-A-0 816 130 ist ein Reifen mit einem Laufstreifen bekannt, welcher an beiden Seiten des Reifenäquators Quernuten aufweist, die sich ausgehend von den Laufstreifenrändern in das Profilinnere erstrecken und nahe des Reifenäquators in breite Umfangsnuten münden. Über die Erstreckung der Quernuten sind ihre Nutflanken gegenüber der radialern Richtung unter einem sich über kontinuierlich ändernden Winkel geneigt. Die Nutflanke ändert Ihre Neigung derart, dass der Winkel, den sie mit der radialen Richtung einschließt, im Bereich des Laufstreifenrandes größer ist als im Einmündungsbereich zu breiten Umfangsnut. Die gegenüberliegende Nutflanke ist entgegengesetzt geneigt. Durch diese Maßnahmen soll vor allem die Stabilität des Reifens bei Geradeausfahrt verbessert sein, ohne den Nassgriff und das Geräusch zu beeinträchtigen.

Der Erfindung liegt die Aufgabe zu Grunde, einen Fahrzeugluftreifen mit einem Laufstreifenprofil der eingangs genannten Art hinsichtlich seines Entwässerungsvermögens zu verbessern.

Ein erfindungsgemäß ausgeführter Fahrzeugluftreifen ist gekennzeichnet durch Sacknuten, deren der Abrollrichtung abgewandte Nutflanken jeweils eine Flankenfläche aufweisen, deren Neigung gegenüber der radialen Richtung sich über ihre Erstreckung kontinuierlich ändert, sodass die Flankenfläche bei der Umfangsnut ihren größten Winkel mit der radialen Richtung einschließt, wobei die der Flankenfläche mit sich ändernder Neigung gegenüber liegende Flankenfläche zumindest im Wesentlichen in radialer Richtung verläuft.

Durch diese besonders gestaltete Flankenfläche kann in die Sacknut einströmendes Wasser unter weitgehender Vermeidung von Verwirbelungen sowohl zur Seite als auch über die Umfangsnuten in Umfangsrichtung abgeleitet werden.

Um unerwünschte Verwirbelungen von anströmenden Wasser möglichst zu verhindern, sollte die Flankenfläche mit sich ändernder Neigung im Bereich der Umfangsnut zur radialen Richtung unter einem Winkel von 45° bis 80° verlaufen. Je größer dieser Winkel ist umso besser verteilt sich anströmendes Wasser.

Um das Nutvolumen von mit erfindungsgemäß ausgeführten Blockflanken begrenzten Quernuten im Wesentlichen in dem für Quernuten üblichen Bereich zu halten, ist es von Vorteil, wenn die Nutgrundfläche zwischen den beiden Flankenflächen speziell ausgeführt wird, indem sie eine sich über ihre Erstreckung, beginnend bei der Umfangsnut, kontinuierlich größer werdende Breite aufweist. Dabei kann die Breite der Nutgrundfläche im Bereich der Umfangsnut sehr klein oder auch Null sein.

Die mit erfindungsgemäß ausgeführten Flanken versehenen Sacknuten können ferner eine gegenüber der Profiltiefe geringere Tiefe aufweisen. Diese Maßnahme ist für die Umfangsstabilität der Profilpositive von Vorteil.

Von besonderem Vorteil ist, wenn im Laufstreifen Profilpositive vorgesehen sind, welche in die eine Umfangsrichtung geneigte Sacknuten, und andere, welche in die andere Umfangsrichtung geneigte Sacknuten aufweisen, wobei bei einer bestimmten Abrollrichtung die Flankenflächen mit sich ändernder Neigung in den in die eine Umfangsrichtung geneigten Sacknuten der Abrollrichtung abgewandt und in den in der anderen Umfangsrichtung geneigten Sacknuten der Abrollrichtung zugewandt sind.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf eine Teilabwicklung eines Teilbereiches eines Laufstreifens für einen Fahrzeugluftreifen,
Fig. 2 ein Detail eines erfindungsgemäß ausgeführten Laufstreifens in Schrägansicht,
Fig. 3 bis 5 Schnitte entlang der Linien III-III, IV-IV und V-V der Fig. 1.

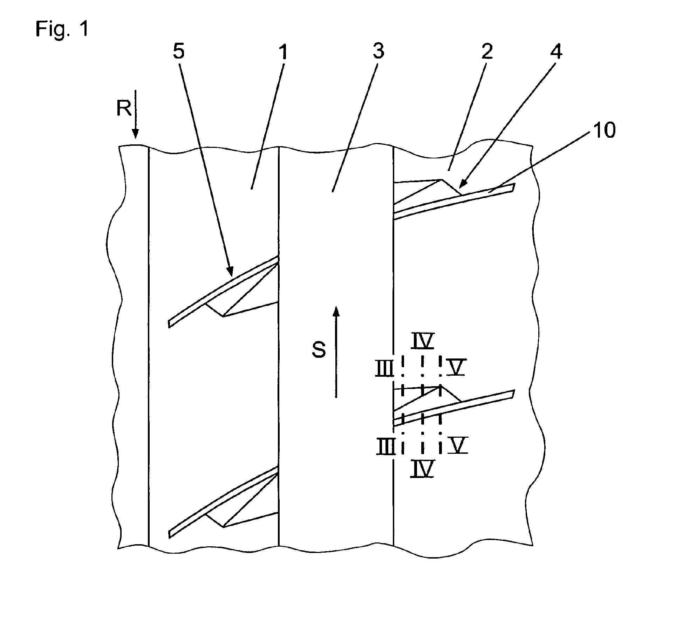

Fig. 1 zeigt beispielhaft Profilstrukturen, die erfindungsgemäß ausgeführt sein können. Zu diesen Profilstrukturen gehören in der Umfangsrichtung des Laufstreifens umlaufende Laufstreifenbänder 1, 2, die voneinander durch eine breite Umfangsnut 9 getrennt sind. An diese Bänder 1, 2 können seitlich, durch weitere Umfangsnuten getrennt, andere Profilstrukturen, wie Laufstreifenbänder oder Blockreihen, anschließen. Die Laufstreifenbänder 1, 2 sind mit Sacknuten 4, 5 versehen, welche sich von der breiten Umfangsnut 3 ausgehend in die beiden Bänder 1, 2 erstrecken. Die in dem in Fig. 1 rechts dargestellten Laufstreifenband 2 angeordneten Sacknuten 4 sind bezüglich der einen Umfangsrichtung unter einem spitzen Winkel geneigt, die in dem anderem Laufstreifenband 1 angeordneten Sacknuten 5 sind zur anderen Umfangsrichtung unter einem spitzen Winkel geneigt.

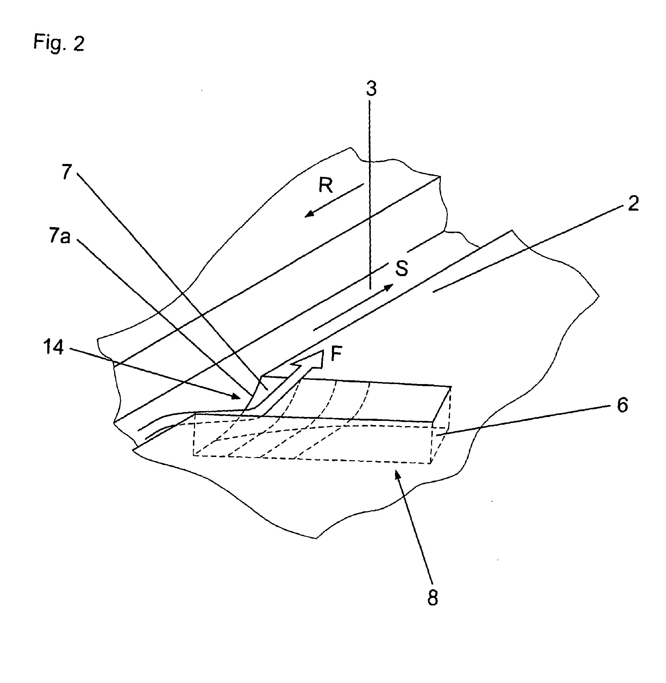

Gemäß der Erfindung sind die Flankenflächen der Sacknuten 4, 5 besonders ausgeführt. Wie die vereinfachte Ausführung in Fig. 2 zeigt, ist die dargestellte Sacknut 14 im Wesentlichen durch eine Nutgrundfläche 6, eine Flankenfläche 7 mit sich änderndem Winkel und eine steile Flankenfläche 8 begrenzt. Die steile Flankenfläche 8 verläuft über ihre Länge vorzugsweise unter einem zumindest im Wesentlicnen Konstanten Winkel von 0 bis etwa 5° zur radialen Richtung. Die der steilen Flankenfläche 8 gegenüberliegende Flankenfläche 7 verläuft an ihrer Kante 7a zur Umfangsnut 2 zur radialen Richtung unter einem Winkel α von 45° bis 80°, wobei sich der Winkel α in Richtung des geschlossenen Endes der Sacknut 14 verringert, sodass das innenseitige Ende der Flankenfläche 7 entweder in radialer Richtung verläuft oder unter einem Winkel α, der nur geringfügig, insbesondere bis zu 5° von der radialen Richtung abweicht. Die Nutgrundgrundfläche 6 ändert ihre Breite über ihren Verlauf derart, das sie ihre kleinste Breite bei der Umfangsnut 3 und ihre größte Breite am Ende der Sacknut 14 aufweist. Dabei kann die Nutgrundgrundfläche 6 im Bereich der Umfangsnut 3 auch die Breite Null aufweisen. Durch diese Ausgestaltung können bei einer erfindungsgemäß ausgeführten Sacknut 14 die beiden Kanten an der Profiloberfläche, wie es auch bei herkömmlichen Sacknuten meist der Fall ist, in Richtung zum Sacknutende ihren gegenseitigen Abstand verringern.

Fig. 2 verdeutlicht auch die Wirkungsweise von erfindungsgemäß ausgeführten Sacknuten. Der Pfeil R zeigt die Drehrichtung des Reifens, der Pfeil S die Strömungsrichtung von in die Umfangsnut 3 eindringendem Wasser, wenn der Reifen auf Nässe fährt. Vor dem Reifen bildet sich bei Fahrt auf nassem Untergrund, in Abhängigkeit von der Fahrgeschwindigkeit, ein Wasserkeil, dessen Wasser durch die Umfangsnuten und die weiteren Nuten, beispielsweise die Sacknuten, abgeleitet werden soll. Die dargestellte Sacknut 14 ist gegen die Drehrichtung R und in die Strömungsrichtung S geneigt. Die in Fig. 2 gezeigte Flankenfläche 7 ist daher in der Lage, ein Abtransportieren des Wassers aus der in Strömungsrichtung geschlossenen Sacknut 14 zu unterstützen. Dies ist in Fig. 2 durch den Pfeil F verdeutlicht, der den Strömungsweg von in die Sacknut 14 einströmenden Wasser zeigt und verdeutlicht, dass in die Sacknut 14 strömendes Wasser in die breite Umfangsnut 3 geleitet wird.

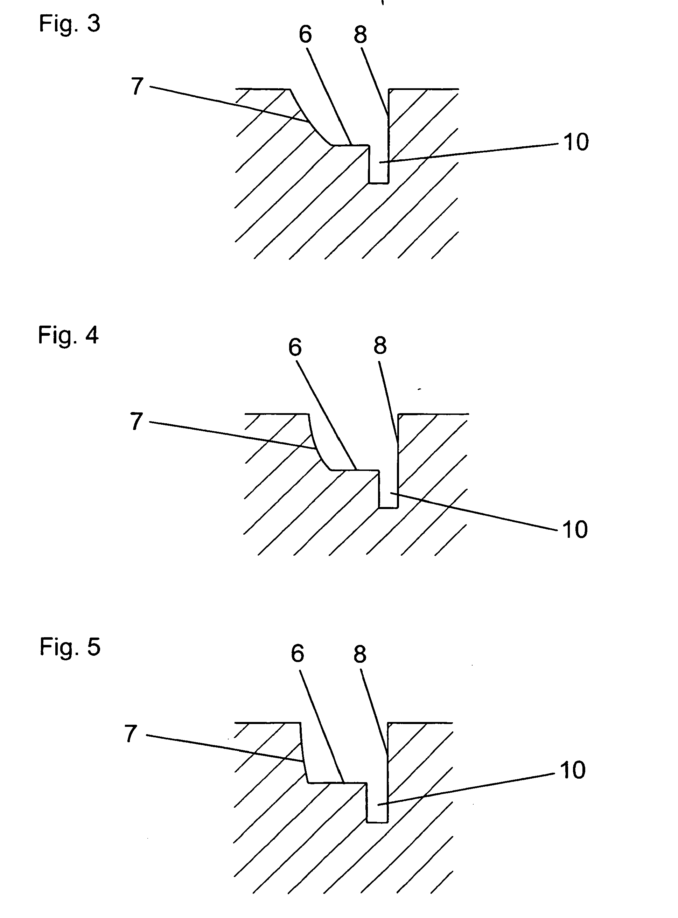

Die in Fig. 1 sowie in den Fig. 3 bis 5 gezeigten Sacknuten 4, 5 reichen nicht auf die Profiltiefe der Umfangsnuten 3, sondern etwa auf 50% der Profiltiefe. Bis auf jeweils einen zusätzlich in Verlängerung der steilen Flankenfläche 8 vorgesehenen schmalen Einschnitt 10, welcher nahezu auf die Profiltiefe reicht und welcher sich über das Ende der Sacknuten 5, 7 erstreckt, sind die Sacknuten 4, 5 gemäß der in Fig. 2 gezeigten Sacknut 14 ausgeführt.

Die in Fig. 1 im Laufstreifenband 2 vorgesehenen Sacknuten 4 sind gemäß Fig. 2 orientiert. Die im Laufstreifenband 1 verlaufenden Sacknuten 5 sind ebenfalls erfindungsgemäß ausgeführt, aber in die andere Umfangsrichtung geneigt und es sind die Positionen der Flankenflächen 7 und 8 gegenüber jenen in den Sacknuten 4 vertauscht, sodass, falls der Reifen in die andere Umfangsrichtung dreht, die Sacknuten 5 jene sind, die erfindungsgemäß Wasser ableiten. Somit kann der Reifen in beiden Drehrichtungen mit gleicher Wirkung betrieben werden.

Die Erfindung ist auf die dargestellte Ausführungsform nicht eingeschränkt. So kann beispielsweise bei einem laufrichtungsgebunden ausgeführten Laufstreifenprofil die Orientierung sämtlicher Sacknuten gegenüber der Drehrichtung entsprechend übereinstimmen.

## Patentansprüche

1. Fahrzeugluftreifen mit einem Laufstreifen, welcher durch Umfangsnuten (3) und dergleichen gebildete Profilpositive, beispielsweise Laufstreifenbänder (1, 2) oder Blöcke in Blockreihen, aufweist, welche mit Sacknuten (4, 5, 14) versehen sind, die sich von einer Umfangsnut (3) ausgehend in das Laufstreifenband (1, 2) oder einen Block erstrecken und zur Abrollrichtung (R) des montierten Reifens derart unter einem spitzen Winkel geneigt verlaufen, dass jeweils beim Abrollen des Reifens das in die Umfangsnut (3) mündende Ende der Sacknuten (4, 5, 14) vor ihrem anderen Ende in den Untergrund eintritt, und welche Sacknuten (4, 5, 14) jeweils eine der gewählten Abrollrichtung (R) des Reifens zugewandte Nutflanke, welche an die beim Abrollen des Reifens zuerst in den Untergrund eintretende Randkante der Sacknut (4, 5, 14) anschließt, und, dieser Nutflanke gegenüberliegend, eine der Abrollrichtung (R) abgewandte, beim Abrollen des Reifens auf nassem Untergrund von Wasser angeströmte Nutflanke aufweisen,
**gekennzeichnet durch**
Sacknuten (4, 5, 14), deren der Abrollrichtung (R) abgewandte Nutflanken jeweils eine Flankenfläche (7) aufweisen, deren Neigung gegenüber der radialen Richtung sich über ihre Erstreckung kontinuierlich ändert, sodass die Flankenfläche (7) bei der Umfangsnut (3) ihren größten Winkel (α) mit der radialen Richtung einschließt, wobei die der Flankenfläche (7) mit sich ändernder Neigung gegenüber liegende Flankenfläche (8) zumindest im Wesentlichen in radialer Richtung verläuft.

2. Fahrzeugluftreifen nach Anspruch 1, **dadurch gekennzeichnet, dass** die Flankenfläche (7) mit sich ändernder Neigung im Bereich der Umfangsnut (3) zur radialen Richtung unter einem Winkel (α) von 45° bis 80° und an ihrem anderen Ende zumindest im Wesentlichen in radialer Richtung verläuft.

3. Fahrzeugluftreifen Anspruch 1 oder 2, **dadurch gekennzeichnet, dass** zwischen den beiden Flankenflächen (7, 8) eine Nutgrundfläche (6) verläuft, welche eine sich über ihre Erstreckung, beginnend bei der Umfangsnut (3), kontinuierlich größer werdende Breite aufweist.

4. Fahrzeugluftreifen nach einem der Ansprüche 1 bis 3, **dadurch gekennzeichnet, dass** die Sacknuten (4, 5, 14) eine gegenüber der Profiltiefe geringere Tiefe aufweisen.

5. Fahrzeugluftreifen nach einem der Ansprühe 1 bis 4, **dadurch gekennzeichnet, dass** Profilstrukturen, wie Laufstreifenbänder oder Blockreihen, vorgesehen sind, welche in die eine Umfangsrichtung geneigte Sacknuten (4), und andere, welche in die andere Umfangsrichtung geneigte Sacknuten (5) aufweisen, wobei bei einer bestimmten Abrollrichtung die Flankenflächen (7) mit sich ändernder Neigung in den in die eine Umfangsrichtung geneigten Sacknuten (4) der Abrollrichtung abgewandt und in den in der anderen Umfangsrichtung geneigten Sacknuten (5) der Abrollrichtung zugewandt sind.

## Claims

1. Pneumatic vehicle tyre with a tread rubber, which has profile positives formed by circumferential grooves (3) and the like, for example tread rubber strips (1, 2) or blocks in rows of blocks, which are provided with blind grooves (4, 5, 14), which extend from a circumferential groove (3) into the tread rubber strip (1, 2) or a block and run inclined in relation to the rolling direction (R) of the fitted tyre at an acute angle in such a way that, whenever the tyre rolls, the end of the blind grooves (4, 5, 14) that opens out into the circumferential groove (3) enters the underlying surface before its other end, and which blind grooves (4, 5, 14) respectively have a groove flank facing in the chosen rolling direction (R) of the tyre, which adjoins the peripheral edge of the blind groove (4, 5, 14) entering the underlying surface first during rolling of the tyre and have, lying opposite this groove flank, a groove flank facing away from the rolling direction (R), against which water flows when the tyre rolls on a wet underlying surface,
**characterized by**
blind grooves (4, 5, 14) of which the groove flanks that are facing away from the rolling direction (R) respectively have a flank face (7) of which the inclination with respect to the radial direction changes continuously over its extent, so that the flank face (7) forms its greatest angle (α) with the radial direction at the circumferential groove (3), the flank face (8) that lies opposite the flank face (7) with changing inclination running at least substantially in the radial direction.

2. Pneumatic vehicle tyre according to Claim 1, **characterized in that** the flank face (7) with changing inclination runs at an angle (α) of 45° to 80° in relation to the radial direction in the region of the circumferential groove (3) and at its other end runs at least substantially in the radial direction.

3. Pneumatic vehicle tyre according to Claim 1 or 2, **characterized in that** between the two flank faces (7, 8) there runs a groove base area (6), which has a width that becomes continuously greater over its extent, beginning at the circumferential groove (3).

4. Pneumatic vehicle tyre according to one of Claims 1 to 3, **characterized in that** the blind grooves (4, 5, 14) have a depth that is less than the profile depth.

5. Pneumatic vehicle tyre according to one of Claims 1 to 4, **characterized in that** profile structures, such as tread rubber strips or rows of blocks, are provided, which structures have blind grooves (4) inclined in one circumferential direction and other blind grooves (5) inclined in the other circumferential direction, wherein, given a specific rolling direction, the flank faces (7) with changing inclination in the blind grooves (4) that are inclined in one circumferential direction face away from the rolling direction and the flank faces (7) with changing inclination in the blind grooves (5) that are inclined in the other circumferential direction face in the rolling direction.

## Revendications

1. Bandage pneumatique pour roue de véhicule doté d'une bande de roulement qui présente des profils positifs, par exemple des rubans (1, 2) de bande de roulement ou des blocs en séries de blocs, formés par des rainures périphériques (3) ou similaires et dotés de rainures en cul-de-sac (4, 5, 14) qui s'étendent entre une rainure périphérique (3) et le ruban (1, 2) de bande de roulement ou un bloc et qui sont inclinées sous un angle aigu par rapport à la direction de roulement (R) du bandage monté, de telle sorte que lorsque le bandage roule, l'extrémité des rainures en cul-de-sac (4, 5, 14) qui débouchent dans la rainure périphérique (3) entre en contact avec le sol avant leur autre extrémité, toutes les rainures en cul-de-sac (4, 5, 14) présentant un flanc de rainure orienté dans la direction de roulement (R) sélectionnée pour le bandage et qui se raccorde à l'arête de bordure de la rainure en cul-de-sac (4, 5, 14) qui entre la première en contact avec le sol lorsque le bandage roule, ainsi que face à ce flanc de rainure, un flanc de rainure non orienté dans la direction (R) du roulement lorsque le bandage roule et balayé par l'eau lorsque le sol est mouillé,
**caractérisé par**
des rainures en cul-de-sac (4, 5, 14) dont les flancs non orientés dans la direction (R) de roulement présentent tous une surface de flanc (7) dont l'inclinaison par rapport à la direction radiale varie de manière continue le long de son extension de telle sorte que la surface de flanc (7) forme sur la rainure périphérique (3) son plus grand angle (α) avec la direction radiale, la surface de flanc (8) située face à la surface de flanc (7) et dont l'inclinaison varie s'étendant au moins essentiellement dans la direction radiale.

2. Bandage pneumatique pour roue de véhicule selon la revendication 1, **caractérisé en ce que** la surface de flanc (7) à inclinaison variable s'étend sous un angle (α) de 45° à 80° par rapport à la direction radiale au niveau de la rainure périphérique (3) et s'étend au moins essentiellement dans la direction radiale à son autre extrémité.

3. Bandage pneumatique pour roue de véhicule selon les revendications 1 ou 2, **caractérisé en ce qu'**entre les deux surfaces de flanc (7, 8) s'étend une surface (6) de fond de rainure dont la largeur augmente en continu sur son extension à partir de la rainure périphérique (3).

4. Bandage pneumatique pour roue de véhicule selon l'une des revendications 1 à 3, **caractérisé en ce que** les rainures en cul-de-sac (4, 5, 14) présentent une profondeur moindre que celle du profil.

5. Bandage pneumatique pour roue de véhicule selon l'une des revendications 1 à 4, **caractérisé en ce qu'**il présente des structures profilées, par exemple des rubans de bande de roulement ou des séries de blocs, qui présentent des rainures en cul-de-sac (4) inclinées dans la direction périphérique et d'autres rainures en cul-de-sac (5) inclinées dans l'autre direction périphérique, les surfaces de flanc (7) à inclinaison variable n'étant pas orientées dans la direction de roulement dans les rainures en cul-de-sac (4) inclinées dans une direction périphérique et étant orientées dans la direction de roulement dans les rainures en cul-de-sac (5) inclinées dans l'autre direction périphérique.
